# FASCICULE DE BREVET EUROPEEN

(11) **EP 1 830 949 B1**
(45) Date de publication et mention de la délivrance du brevet: **25.01.2012**
(21) Numéro de dépôt: 05850532.2
(22) Date de dépôt: 15.12.2005
(51) Int. Cl.: B01J 13/14

(54) **NOUVEAU PROCEDE DE PREPARATION DE PARTICULES DONT AU MOINS LA SURFACE PERIPHERIQUE EST DE NATURE POLYMERIQUE, METTANT EN OEUVRE UN REACTEUR MEMBRANAIRE**
NEUES VERFAHREN ZUR HERSTELLUNG VON TEILCHEN, VON DENEN MINDESTENS DIE PERIPHERE OBERFLÄCHE POLYMER IST, UNTER VERWENDUNG EINES MEMBRANREAKTORS
NOVEL METHOD FOR PREPARING PARTICLES WHEREOF AT LEAST THE PERIPHERAL SURFACE IS POLYMERIC, USING A MEMBRANE REACTOR

(30) Priorité: 21.12.2004 FR 0413631
(43) Date de publication de la demande: 12.09.2007
(73) Titulaire: UNIVERSITE CLAUDE BERNARD - LYON 1, 69622 Villeurbanne Cédex (FR); CENTRE NATIONAL DE LA RECHERCHE SCIENTIFIQUE (CNRS), 75794 Paris Cedex 16 (FR)
(72) Inventeur: CHARCOSSET, Catherine, F-69160 Tassin La Demi Lune (FR); FESSI, Hatem, F-69003 Lyon (FR)
(74) Mandataire: Sarlin, Laure V.
(86) Numéro de dépôt international: PCT/FR2005/003144
(87) Numéro de publication internationale: WO 2006/067307

(56) Documents cités:
- EP-A- 0 274 961
- WO-A-01/68235
- US-A- 5 376 347
- US-A1- 2003 176 282

## Description

La présente invention est relative à un nouveau procédé mettant en oeuvre un réacteur membranaire, qui permet de préparer des particules comprenant au moins une partie polymérique, et en particulier des particules de taille nanométrique.

Depuis quelques années, les systèmes colloïdaux sont de plus en plus utilisés en agrochimie, en cosmétologie et surtout en pharmacie. Dans ce domaine, les systèmes tels que les liposomes, les microémulsions et les nanoparticules, dont la taille est inférieure au micron sont utilisés comme systèmes thérapeutiques. Ces différentes formes ont été développées pour améliorer les performances des médicaments et véhiculer les principes actifs dans l'organisme vers des cellules cibles afin d'améliorer l'effet thérapeutique et/ou de diminuer l'effet toxique.

La vectorisation des principes actifs est une technique qui a pris un essor considérable et qui a fait l'objet de nombreuses recherches ces dernières années, aboutissant à la conception de diverses formes de particules colloïdales associant une molécule active et un support. Dans le domaine médical notamment, l'utilisation de vecteurs médicamenteux présente en effet l'avantage de pouvoir intervenir sur le processus de distribution du principe actif dans l'organisme et d'en augmenter l'efficacité. La molécule active incorporée dans un matériau support peut être orientée spécifiquement vers la cible à traiter où sa concentration est alors localement élevée. L'efficacité est ainsi accrue, tout en diminuant les doses nécessaires et par là aussi les risques d'effets secondaires par imprégnation d'autres organes.

La présente invention a trait à la préparation de particules et en particulier de nanoparticules de diamètre inférieur à 1000 nm, dont la surface est de nature polymérique. Au sens de l'invention, les nanoparticules polymériques comprennent les nanosphères entièrement polymériques et les nanocapsules comprenant une enveloppe polymérique entourant un coeur liquide ou solide qui peut donc être non polymérique. L'association entre la particule support et le principe actif peut se faire de diverses façons en fonction du type de particules et de l'effet recherché. La molécule active peut être dissoute ou dispersée et encapsulée dans la particule, ou alors elle peut être adsorbée ou fixée en surface de la particule. Dans le premier cas, la libération du principe actif se fera par dissolution du polymère constituant la particule ou sa membrane ou par diffusion à travers ce dernier. La nature et la structure du réseau de polymère et notamment sa porosité jouent alors un rôle fondamental. Dans le cas d'une liaison en surface, cette dernière doit être réversible pour libérer le principe au niveau de la cible à traiter. Il est également intéressant de modifier la nature du polymère utilisé afin de faire varier des caractéristiques telles que porosité, biodégradabilité, propriétés de transfert, ainsi que la biodisponibilité du principe actif. Dans le cas des « nanosphères », le ou les principes actifs peuvent être piégés et/ou dissous au sein du polymère constitutif de la sphère solide, dans ce cas ils sont donc distribués dans toute la nanosphère ; ou adsorbés ou liés en surface de la nanosphère. Dans le cas des « nanocapsules » le ou les principe(s) actifs sont susceptibles d'être contenus dans le noyau délimité par l'enveloppe polymérique et/ou adsorbés ou liés sur l'enveloppe des vésicules. Les nanocapsules ont ceci d'avantageux sur les nanosphères et les liposomes, qu'elles permettent une meilleure protection des principes actifs incorporés ou encapsulés, de même qu'un meilleur contrôle de leur libération in vivo. En outre, elles permettent l'incorporation de grandes quantités de principes actifs huileux.

Les méthodes de préparation de tels vecteurs colloïdaux sont diverses, chacune d'entre elles permettant l'utilisation de réactifs particuliers et conduisant à un type donné de particules.

Dans le cas de la préparation de nanoparticules dont au moins la partie périphérique est de nature polymérique, on trouve notamment, parmi les techniques traditionnelles de préparation, la nanoprécipitation utilisée, à la fois pour la préparation de nanosphères et de nanocapsules, et la polymérisation interfaciale, en particulier utilisée pour la préparation de nanocapsules.

De nombreux documents de l'art antérieur décrivent ce type de réactions. Dans le cas de la nanoprécipitation, on peut, par exemple citer, le brevet EP 0274961B1 qui décrit un procédé de préparation de nanocapsules, dont la paroi est constituée par une substance polymère **a**, et dont le noyau est constitué par une substance **b**. La première phase liquide est constituée par une solution du polymère **a** dans un solvant ou un mélange de solvants, et contenant la substance **b** en solution ou en dispersion. La seconde phase liquide est constituée essentiellement par un non-solvant ou un mélange de non-solvants de **a** et **b**, additionnée d'un ou de plusieurs tensioactifs ; le solvant ou le mélange de solvants de la première phase étant miscible en toutes proportions au non-solvant ou au mélange de non-solvants de la seconde phase. La première phase est ajoutée, sous agitation modérée, à la seconde phase, de manière à obtenir une suspension colloïdale de nanocapsules. Le brevet EP 0275796B décrit de façon analogue un procédé de préparation de nanosphères.

La polymérisation interfaciale consiste, quant à elle, en une polymérisation de monomères à l'interface d'une émulsion eau dans huile ou huile dans eau. Le polymère se développe en formant une paroi autour des globules de phase hétérogène, ce qui conduit finalement à une enveloppe encapsulant ladite phase hétérogène contenant ou non le principe actif. On produit ainsi une multitude de vésicules en suspension dans la phase continue.

La demande de brevet WO 94/15 590, par exemple, décrit des nanocapsules dont le polymère d'enveloppe est constitué par un alkyl-2-cyanopolyacrylate (alkyl = 4-teroctyl-phényl-, 2'-carboxyéthyl- ou hexadécyl-). Selon ce procédé, on utilise des monomères alkylcyanoacrylates hydrophiles (ester d'acide cyanoacrylique avec du polyéthylène glycol) ou lipophiles (hexadécyl-2-cyanoacrylate) et on met en oeuvre des systèmes mono ou biphasiques. Dans les systèmes monophasiques, le principe actif constitue lui-même la phase dispersée servant de support à la polymérisation qui conduit aux nanocapsules. Dans les systèmes biphasiques faisant intervenir deux liquides non miscibles l'un à l'autre, le principe actif est contenu dans l'une des phases, l'ensemble formant la phase dispersée de l'émulsion, siège de la polymérisation interfaciale.

La demande de brevet WO 01/68235 décrit un procédé de préparation de nanocapsules dont la paroi est constituée par un polymère obtenu par polycondensation de deux monomères α et β et dont le coeur est constitué d'une substance c. La première phase liquide est constituée par une solution de monomère α dans un solvant ou un mélange de solvants, et contenant un ou plusieurs agent(s) tensioactif(s) ainsi que la substance c en solution ou en suspension. La seconde phase liquide est constituée par un non-solvant ou un mélange de non-solvants de α et du polymère résultant de la polymérisation de α et β additionnée d'un ou de plusieurs tensioactifs et contenant le monomère β. Le solvant ou le mélange de solvants de la première phase est miscible en toutes proportions au non-solvant ou au mélange de non-solvants de la seconde phase. La première phase est ajoutée, sous agitation modérée, à la seconde phase, de manière à obtenir une suspension colloïdale de nanocapsules.

US-A-2003/176282 écrit un procédé pour la préparation de microcapsules. Toutes ces méthodes donnent entière satisfaction à l'échelle du laboratoire : elles permettent d'obtenir des particules de différentes dimensions, et en particulier de dimension nanométrique, avantageusement d'un diamètre inférieur à 800 nm, préférentiellement inférieur à 600 nm, et de préférence compris entre 100 et 500 nm, présentant une bonne homogénéité, isodispersité et stabilité dans le temps. Néanmoins, toutes ces méthodes, dans lesquelles la mise en contact des deux phases et leur mélange se fait par agitation mécanique, ne permettent pas de préparer des quantités importantes, qui sont nécessaires à une production industrielle. De plus, ces méthodes ne sont pas adaptées à une production en continu.

L'un des objectifs essentiels de la présente invention est donc de fournir un procédé de préparation de particules, et en particulier de nanoparticules, qui soit aisé et rentable à mettre en oeuvre à l'échelle industrielle. En particulier, la présente invention se propose de fournir un procédé de production de particules, et en particulier de nanoparticules, dont au moins la partie périphérique est de nature polymérique, qui permette une production en continu.

Un autre objectif essentiel de la présente invention est de fournir un procédé de préparation de particules, et en particulier de nanoparticules, qui soit industrialisable, et qui permette un contrôle de la taille des nanoparticules obtenues, et en particulier qui permette l'obtention de nanoparticules d'un diamètre inférieur à 800 nm, préférentiellement inférieur à 600 nm, et de préférence compris entre 100 et 500 nm.

Dans ce contexte, la présente invention a pour objet un procédé de préparation de particules, et en particulier de nanoparticules, dont au moins la partie périphérique est de nature polymérique, à partir d'une première phase **A** et d'une deuxième phase B liquides au moins partiellement miscibles, la deuxième phase **B** contenant un précurseur de la partie polymérique de la particule, ledit précurseur étant soluble dans la phase **B** et au moins partiellement insoluble dans la phase **A**, caractérisé en ce qu'il met en oeuvre un réacteur membranaire comportant une membrane poreuse, dans lequel la première phase **A**, circule tangentiellement à la membrane, et la deuxième phase **B** traverse les pores de la membrane avant de venir rencontrer la première phase **A**, pour former les nanoparticules.

La description qui suit, en référence aux figures annexées va permettre de mieux comprendre l'invention.
La **figure 1** illustre, schématiquement, le procédé selon l'invention au niveau de la membrane poreuse.
La **figure 2** représente un dispositif de mise en oeuvre du procédé conforme à l'invention.

Le procédé selon l'invention permet la fabrication, en grande quantité, de particules, notamment de diamètre inférieur ou égal à 500 µm, et en particulier de nanoparticules, dont au moins la partie périphérique est de nature polymérique. Par nanoparticules, on entend des particules de forme sphérique, de diamètre inférieur à 1 microns, en particulier inférieur à 800 nm, préférentiellement inférieur à 600 nm, et de préférence compris entre 100 et 500 nm, la gamme de 200 à 350 nm étant particulièrement préférée. Dans la suite de la description, on utilisera indifféremment, le terme « particule », ou « nanoparticule », en sachant que l'invention est plus particulièrement destinée à la production de nanoparticules, telles que définies ci-dessus.

Comme indiqué précédemment, l'expression « nanoparticules dont au moins la partie périphérique est de nature polymérique» désigne les nanocapsules (enveloppe polymérique autour d'un coeur liquide ou solide) et les nanosphères (structure polymérique homogène). Les méthodes de préparation de nanoparticules sont classées en deux catégories : les méthodes de préparation avec des polymères préformés, comme la nanoprécipitation, et les méthodes de préparation avec une réaction de polymérisation, comme la polymérisation interfaciale.

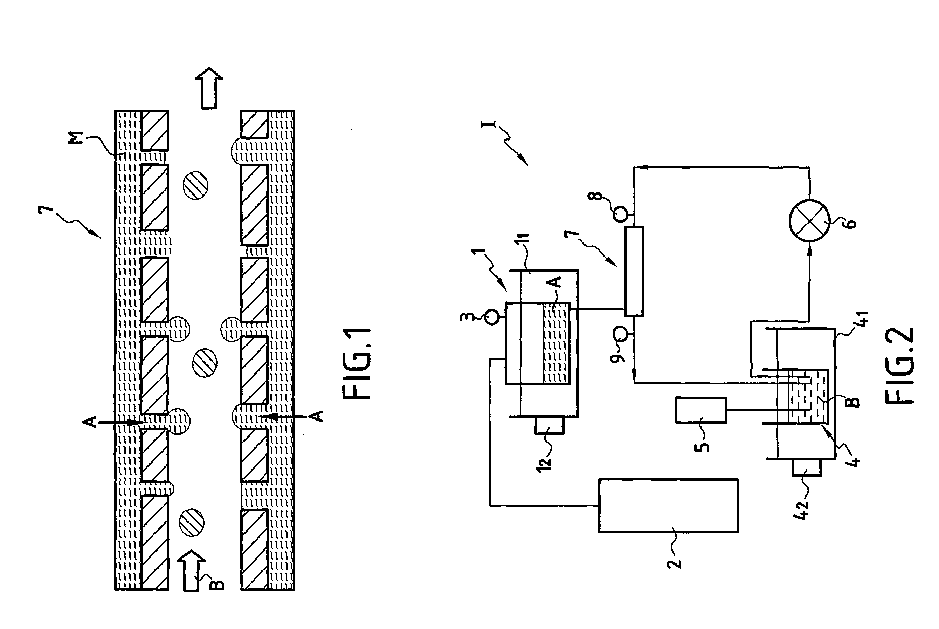

Dans le cadre de l'invention, la préparation des nanoparticules va être réalisée en utilisant un réacteur membranaire comportant une membrane poreuse. Le nouveau procédé de fabrication de nanoparticules selon l'invention utilise une membrane poreuse pour l'introduction sous pression d'une phase **B** qui traverse les pores d'une membrane poreuse pour arriver dans une phase **A** qui circule tangentiellement de l'autre coté de la membrane, comme cela est illustré **figure 1**.

Par membrane, on entend de préférence un élément poreux homogène sur toute son épaisseur, c'est notamment le cas des membranes de nature polymérique et des supports céramiques. Il pourrait également être envisagé d'utiliser une membrane céramique non homogène sur son épaisseur, constituée d'un support et d'une couche séparatrice.

Le diamètre moyen maximum de pores adapté pour la préparation de particules conformes à l'invention est, de préférence, compris entre 1 nm et 10 µm, et préférentiellement compris entre 10 nm et 1 µm, dans le cas de la préparation de nanoparticules.

Dans le cas d'une membrane comportant un support et une couche séparatrice, c'est le diamètre de pore de la couche séparatrice qui est déterminant. Cette couche séparatrice se trouvera en contact avec la phase **A** qui circulera tangentiellement à la surface de cette dernière.

Toute forme de membrane peut être envisagée : des membranes planes, des membranes tubulaires comportant un ou plusieurs canaux de circulation, le long desquels circule la phase **A**.

Le procédé selon l'invention peut être mis en oeuvre avec tout type de méthodes mettant en oeuvre au moins deux phases, et avantageusement seulement deux phases, qui permet de préparer des particules, et en particulier des nanoparticules, qui sont de nature polymérique, au moins sur leur partie périphérique. On pourra notamment se référer aux documents EP 0274961B, EP 0275796B, WO 94/15 590, WO 01/68235 qui décrivent en détail certaines de ces méthodes, que l'homme du métier pourra mettre en oeuvre dans l'invention.

Au sens de l'invention, l'on applique une pression sur une phase **B**, en la plaçant par exemple dans un récipient sous pression, de façon à la faire passer à travers les pores d'une membrane. La pression appliquée sur la phase **B** peut être choisie : elle est élevée et peut atteindre, par exemple, 6 bar, afin de permettre le passage de la phase **B** à travers la membrane. La phase **B** contient un précurseur, qui peut être le polymère **P₁** qui va lui-même constituer, après précipitation, la nanoparticule ou l'enveloppe de la nanoparticule, ou bien un monomère **M₁** qui va le plus souvent copolymériser avec un monomère contenu dans la phase **A**, pour former la nanoparticule ou l'enveloppe de la nanoparticule. Ce polymère **P₁** ou monomère **M₁** est en solution, au sein de la phase **B**, dans un solvant ou mélange de solvants **S1** dans lequel le polymère ou monomère est soluble et qui favorise le passage dudit polymère ou monomère, à travers les pores de la membrane, grâce à des tensions superficielles très favorables.

La phase **A** circule tangentiellement à la surface de la membrane avec une vitesse de circulation que l'on peut également choisir. Le polymère **P₁** ou monomère **M₁** qui est en solution dans le solvant **S₁** de la phase **B** est au moins partiellement insoluble dans la phase **A** et dans le mélange des phases **A** + **B**. La réaction de nanoprécipitation du polymère ou de polymérisation interfaciale se produit entre les gouttelettes de la phase **B** formée par passage à travers les pores de la membrane et la phase **A**. Les pores de la membrane constituent, en effet, un réseau de pores interconnectés qui permettent d'amener la phase **B** dans la phase **A** sous la forme de gouttelettes. Le mélange entre les deux phases se fait grâce à l'écoulement tangentiel de la phase **A**. L'écoulement tangentiel de la phase **A** entraîne également les nanoparticules formées évitant ainsi le colmatage des pores de la membrane.

Dans le cas où la phase **B**, contient un polymère **P₁** en solution dans le solvant (ou mélange de solvants) **S₁**, la phase **A** est, quant à elle constituée d'un solvant **S₂**.

Dans le cas où la phase **B** contient un monomère **M₁**, la phase **A** comprend alors, en solution dans le solvant S₂, le plus souvent, un monomère **M₂** différent du monomère **M₁**. Le solvant **S₂** est un non solvant du monomère **M₁**, et du polymère formé avec **M₁** et **M₂**.

Dans le cas où l'on souhaite former une nanocapsule dont le coeur serait constituer par une huile, la phase **B** contient, en plus, une huile **H**. Dans tous les cas, la phase **B** peut contenir une ou plusieurs substances **S**. Dans les cas où la phase **B** contient une huile **H**, cette dernière doit être au moins partiellement insoluble dans la phase **A**. De plus, la substance **S** et l'huile **H** seront avantageusement choisies de façon à ce que l'huile **H** soit soluble dans le solvant **S₁** et la substance **S** soit soluble ou dispersible dans ce solvant **S₁** et également dans l'huile **H** (lorsqu'une telle huile est présente).

Pour les notions de solubilité, miscibilité, on pourra se référer, par exemple, aux Techniques de l'Ingénieur, Ref J2152. Au sens de l'invention, quand, on dit qu'une phase est miscible avec une autre phase, il faut comprendre que c'est leur solvants qui sont miscibles. De même, lorsque l'on dit qu'un composé est soluble ou insoluble dans une phase, il faut comprendre qu'il est soluble ou insoluble dans le solvant de cette phase.

Dans tous les cas, la phase **A** contient un solvant ou mélange de solvants **S₂**, auquel peut être additionné un ou plusieurs tensioactifs **T₂** et de la phase **B** contient un solvant ou mélange de solvants **S₁**, auquel peut être additionné un ou plusieurs tensioactifs **T₁**. Les tensioactifs **T₁** et **T₂** ne sont pas nécessaires pour la formation des nanoparticules, mais servent à stabiliser la dispersion obtenue.

Bien entendu, les solvants des phases **A** et **B** ne doivent pas être réactifs avec les composés présents dans chacune des phases. De plus, les solvants seront présents dans chacune des phases en une proportion choisie pour obtenir des phases relativement fluides, de façon à permettre leur circulation dans le dispositif et leur passage dans la membrane. En particulier, le solvant S₁ pourra constituer de 50 à 99 % du volume de la phase **B**, de préférence entre 70 et 95 %.

Avantageusement, la première phase **A** est une phase aqueuse, de préférence de l'eau ou un solvant non aqueux hydrophile, dans laquelle on utilise comme agent tensioactif un ou plusieurs agents(s) tensioactifs(s) **T₂** ioniques et/ou non ioniques, de préférence ceux dont la balance hydrophile/lipophile est élevée parmi ceux mentionnés ci-dessous.

Dans la mesure où les conditions de solubilité, d'insolubilité, de miscibilité et de non réactivité sont remplies, le solvant ou le mélange de solvants **S₁** de la phase **B** peut constituer de 10 à 90 % du volume du mélange final, de préférence entre 25 à50%.

Le solvant ou le mélange de solvants **S₁** de la deuxième phase **B** est avantageusement un solvant organique ou un mélange de solvants organiques, de sorte que la première phase **A** constituera la phase aqueuse, et le solvant ou le mélange de solvants **S₁** de la seconde phase **B** constituera la phase organique.

Selon un autre aspect du procédé selon l'invention, on peut également utiliser deux phases organiques ou deux phases aqueuses dans la mesure où sont remplies les conditions de solubilité, miscibilité et non réactivité telles que la solubilité du monomère **M₁** ou du polymère **P₁** dans le solvant ou le mélange de solvants **S₁** de la seconde phase **B**, d'insolubilité du monomère **M₁** ou du polymère **P₁** dans le solvant ou le mélange de solvants **S₂** de la première phase **A**, de miscibilité du solvant ou du mélange de solvants **S₁** de la seconde phase **B** et du solvant ou du mélange de solvants **S₂** de la première phase **A**. Les solvants seront, de préférence, volatils, pour faciliter leur élimination ultérieure, si besoin, une fois la suspension colloïdale formée.

Selon un aspect préféré du procédé, la phase **B** contient un solvant organique. On peut alors utiliser comme agent tensioactif un ou plusieurs agents(s) tensioactif(s) amphotères et/ou non ioniques, de préférence, ceux dont la balance hydrophile/lipophile est basse parmi ceux mentionnés ci-dessous.

De façon avantageuse, le solvant ou le mélange de solvants **S₁** de la seconde phase **B** peut être, par exemple, un solvant organique, de préférence volatil, choisi parmi une cétone inférieure (acétone, méthyléthylcétone, par exemple,), un hydrocarbure léger ou un mélange d'hydrocarbures légers (hexane, par exemple,), un hydrocarbure léger chloré (chloroforme, chlorure de méthylène), et d'autres solvants usuels tels que l'acétonitrile, le dioxane, le tétrahydrofurane, par exemple, et leurs mélanges.

Le solvant (ou mélange de solvants) **S₁** de la phase **B** est toujours choisi, de façon à être, au moins partiellement miscible, de préférence totalement miscible, avec le solvant (ou mélange de solvants) **S₂** de la phase **A**.

La phase **B** contient toujours un précurseur polymérique de la particule : soit un polymère **P₁** qui va précipiter, à l'interface des phases **A** et **B**, soit un monomère **M₁** qui le plus souvent donnera lieu à une réaction de polymérisation avec un autre monomère **M₂** présent dans la phase **A**. L'important est que le polymère **P₁** ou le monomère **M₁** soit suffisamment soluble (au moins partiellement et de préférence totalement soluble) dans le solvant **S₁** de la phase **B** et suffisamment insoluble (au moins partiellement et de préférence totalement insoluble) dans le solvant **S₂** de la phase **A**.

Le procédé selon l'invention peut être adapté à divers polymères **P₁**, aussi bien un polymère synthétique, par exemple l'acide poly(d,1)lactique (PLA), un polymère hémisynthétique comme, par exemple, l'acétate butyrate de cellulose, l'éthylcellulose, le phtalate d'hydroxyméthylpropylcellulose (HPMCP), qu'un polymère naturel, par exemple, la gélatine et la gomme arabique.

De nombreux autres polymères peuvent être utilisés, par exemple : l'acétophtalate de polyvinyle, l'acéto-phthalate de cellulose; des dérivés maléiques (par ex. "Gantrez"); les copolymères d'acide acrylique et d'acrylates et les polymères acryliques (par ex.Eudragit TM ); l'acide polylactique d ou 1, et (d,1); les copolymères d'acide lactique et d'acide glycolique, polypeptides, glycolides (dérivés de propiolactone, butyrolactone, pivalolactone epsilon -caprolactone, par exemple); les polymères obtenus à partir d'esters cycliques des acides hydroxybutyrique, hydroxyisobutyrique, hydroxyméthylvalérique, phényl-lactique, hydroxyéthylbutyrique; le poly béta malate de benzyle; les copolymères de l'acide malique et du malate de benzyle; un copolymère polyvinylpyrrolidone-acétate de vinyle réticulé, les polycyanoacrylates d'alkyle; les poly (éthylène-vinylacétate); les polymères hydrosolubles comme la méthylcellulose ; les oligomères (styrène allyl alcool), par exemple.

Dans le cas où une réaction de polymérisation est mise en oeuvre, divers couples de monomères (**M₁**, **M₂**) peuvent être utilisés pour former différents types de polymères selon l'application envisagée, par exemple le polyamide, polyurée, polyuréthane, polyester, polycarbonate, polysulfonate, polysulfonamide, etc. Il est également possible d'utiliser un même monomère pour former le polymère : c'est par exemple le cas si l'on utilise un cyanoacrylate. Dans ce cas, le monomère sera présent dans la phase **B**.

Dans un aspect préféré, le monomère **M₁** est choisi parmi les dichlorures d'acides et les diisocyanates. Des monomères **M₁** particulièrement préférés sont le chlorure de téréphtaloyle, le chlorure de sébacolyle, le toluylène-2,4-diisocyanate et l'hexaméthylène diisocyanate. D'autres monomères, tel que du laurate d'héxyle, pourront également être utilisés en tant que monomères **M₁**.

Selon un autre aspect préféré de l'invention, le monomère **M₂** est une diamine ou une triamine, par exemple la triéthylène triamine, la diéthylène triamine, la diéthylène diamine (DETA) ou l'hexaméthylène diamine, un dérivé de glycol, ou encore un acide aminé comme la lysine, l'arginine ou un oligomère de protéines.

Avantageusement, dans le cas où l'on utilise un couple de monomères, la concentration du monomère **M₁** dans le solvant ou le mélange de solvants de la seconde phase **B** est comprise entre 0,01 et 20 % en poids de préférence entre 0,1 et 10 % et plus préférentiellement entre 0,2 et 5 %. La concentration du monomère **M₂** dans le solvant ou le mélange de solvants de la première phase A peut également être comprise entre 0,05 et 50 % en poids de préférence entre 0,5 et 40 % et plus préférentiellement entre 1 et 25%. De façon avantageuse, la concentration du monomère **M₂** est en excès d'au moins 5 fois en nombre de moles par rapport à la concentration du monomère **M₁**.

Dans le cas où l'on utilise deux monomères **M₁** et **M₂** dans chacune des phases, le choix des solvants **S₁** et **S₂** est, de préférence, fait de façon à ce que dans la phase **B**, le monomère soit en solution dans le solvant (ou mélange de solvants) **S₁** et que, dans la phase **A**, le monomère **M₂** soit en solution dans le solvant (ou mélange de solvants) **S₂** et enfin que le solvant **S₂** de la phase **A** soit un non solvant du monomère **M₁**.

Dans le cas où une huile **H** est introduite dans la phase **B**, celle-ci se trouve en suspension ou en solution dans le solvant **S₁**, par contre le solvant **S₂** est un non solvant de l'huile **H**. Cette huile est destinée à former le coeur des nanocapsules produites. L'huile **H** peut être n'importe quelle substance soluble ou dispersible dans le solvant ou le mélange de solvants choisis. En particulier, l'huile **H** peut être une huile végétale ou minérale, ou toute substance huileuse, par exemple l'huile d'olive, le benzoate de benzyle, le myristate d'isopropyle, des glycérides d'acides gras (par exemple un Miglyol®), l'huile d'amande douce, la vitamine E, la vitamine A, ou le parsol^{®} MCX.

La phase **B** peut également contenir une substance **S**, en suspension ou en solution dans le solvant ou mélange de solvant **S₁**. Cette substance **S** va alors être répartie au sein de la nanoparticule : soit au sein du polymère, dans le cas d'une nanosphère homogène, soit dans le coeur de la nanocapsule.

La substance **S** peut être une huile telle que définie ci-dessus, une substance biologiquement active, par exemple une molécule utilisable comme principe actif de médicament ou comme précurseur d'un principe actif de médicament, ou encore un produit de contraste ou un réactif biologique. La substance **S** peut également être un pigment, une encre, un lubrifiant, un agent de traitement de surface. On peut également utiliser en tant que substance **S** un mélange des substances ci-dessus, par exemple une huile contenant une ou plusieurs d'entre elles de ces substances en solution ou en suspension.

Il est également possible de fixer ultérieurement une substance par adsorption à la surface des nanoparticules préparées selon le procédé de l'invention, par simple addition à la suspension colloïdale de la substance, éventuellement après concentration.

L'association entre le matériau support et le principe actif peut se faire de diverses façons en fonction du type de particules et de l'effet recherché. La molécule active peut être dissoute, dispersée ou encapsulée dans la particule, ou alors elle peut être adsorbée ou fixée en surface de la particule. Dans le premier cas, la libération du principe actif se fera par dissolution du polymère constituant la particule ou sa membrane ou par diffusion à travers ce dernier. La nature et la structure du réseau de polymère et notamment sa porosité jouent alors un rôle fondamental. Dans le cas d'une liaison en surface, cette dernière doit être réversible pour libérer le principe au niveau de la cible à traiter. Il est également intéressant de modifier la nature du polymère utilisé afin de faire varier des caractéristiques telles que porosité, biodégradabilité, propriétés de transfert, ainsi que la biodisponibilité du principe actif.

Les agents tensioactifs utilisés peuvent être des agents tensioactifs naturels, ou des agents tensioactifs synthétiques ioniques, non ioniques ou amphotères. En tant qu'agents tensioactifs ioniques, on utilisera par exemple le laurylsulfate de sodium. En tant qu'agents tensioactifs non ioniques, et selon la phase dans laquelle ils seront mis en oeuvre, on utilisera de préférence des agents tensioactifs dont la balance hydrophile/lipophile ou « HLB » (de l'anglais hydrophilic/lipophilic balance) est élevé tels que, par exemple, les dérivés de sorbitanne polyoxoéthylénés (de type Tween®), de copolymères d'oxyde d'éthylène et de propylène (de type Pluronic®) ou des éthers d'alcools gras et de polyoxoéthylèneglycol ou au contraire des agents tensioactifs dont la balance hydrophile/lipophile est basse, tels que les dérivés de sorbitanne (de type Span®). En tant qu'agents tensioactifs amphotères, on utilisera par exemple la lécithine d'oeuf ou de soja ou ses dérivés purifiés.

Dans chacune des phases **A** et **B**, l'agent tensioactif ou le mélange d'agents tensioactifs est, préférentiellement, présent à raison de 0,001 à 10 % en poids, de préférence de 0,01 à 1 % en poids.

Le procédé selon l'invention permet de préparer à grande échelle des particules qui sont stables au cours de leur fabrication, homogènes et stables au cours du temps. En sortie du réacteur membranaire, les solvants des différentes phases **A** et **B** peuvent être au moins pour partie, éliminés par évaporation sous pression réduite ou par une méthode de dessiccation appropriée ou encore par ultrafiltration tangentielle, cette dernière technique permettant également d'éliminer les éventuels monomères résiduels. Il est alors possible d'obtenir une suspension colloïdale de concentration voulue en nanoparticules ou d'obtenir une poudre de nanoparticules.

La taille des particules obtenues est contrôlée par un choix approprié des paramètres liés à la membrane et des paramètres du procédé. En particulier, l'homme du métier sera à même de choisir, en fonction de la dimension souhaitée, d'une part le matériau de la membrane mise en oeuvre et d'autre part sa porosité et son diamètre de pores. Différents types de membranes peuvent être utilisées : des membrane céramiques, minérales ou organiques par exemple. Egalement, une large gamme de diamètre de pores peut être utilisée : des membranes de nanofiltration qui présentent un diamètre de pores inférieur à 1 nm, des membranes d'ultrafiltration qui présentent un diamètre de pores de 1 à 100 nm ou des membrane de microfiltration qui présentent un diamètre de pores de 0,1 à 10 µm. Le choix des membranes mises en oeuvre va jouer sur la taille *(**d**)* des particules obtenues et sur le flux *(**J**)* de la phase organique **B**. Bien entendu, afin d'obtenir des particules de taille homogène, on utilisera des membranes dont le diamètre de pores est le plus homogène possible.

Il est également possible, pour contrôler la taille des particules obtenues, de jouer sur les paramètres du procédé qui sont la pression *(**P**)* de la phase organique **B** et la vitesse de circulation tangentielle *(**U**)* de la phase aqueuse **A**. Une large gamme de pression et de vitesse tangentielle peut être envisagée. Typiquement, une pression de 0,1 bar à 50 bar, de préférence de 0,3 à 15 bar, pour la phase organique sera utilisée. En général, une vitesse tangentielle de 0,001 à 20 m.s⁻¹, de préférence de 0,01 à 10 m.s⁻¹, pour la phase aqueuse **A** sera utilisée.

Par ailleurs, il est possible de jouer sur la longueur de la membrane, ou plus généralement sur la surface membranaire traversée par la phase **B**, pour augmenter le rendement de production.

Il est également possible de disposer plusieurs réacteurs ou modules membranaires en parallèle.

Au vu de ce qui précède, il apparaît que le procédé selon l'invention, malgré sa simplicité, est adapté à différents types de réaction et à la préparation de différents types de particules polymériques. De plus, il permet de préparer des volumes importants en continu et est donc parfaitement adapté à une industrialisation. Le procédé selon l'invention présente une très bonne adaptabilité, il permet d'ajuster la taille des particules. Par exemple, pour diminuer la taille des particules obtenues, on pourra diminuer la concentration de monomères ou de polymère et/ou augmenter la vitesse tangentielle de circulation de la phase **A**.

Les exemples qui suivent permettent d'illustrer l'invention mais n'ont aucun caractère limitatif.

### Exemple 1

Le montage expérimental utilisé dans cet exemple est représenté sur la **Figure 2**. Il comprend :
- un premier récipient pressurisé **1** contenant la phase organique **B** et relié à une bouteille **2** d'azote et équipé d'un manomètre **3**,
- un deuxième récipient **4**, contenant la phase aqueuse **A**, équipé d'un agitateur **5** et reliée à une pompe **6**,
- un module de filtration tangentielle **7** équipé de deux manomètres **8** et **9** et d'une vanne **10**, relié au premier et au deuxième récipient de façon à ce que la phase **A** s'écoule tangentiellement à la membrane et la phase **B** traverse la membrane pour rejoindre la phase **A**. Le montage est réalisé en circuit fermé, c'est-à-dire qu'en sortie de la membrane, la suspension colloïdale est re-mélangée à la phase **A**. Il pourrait également être envisagé de réaliser le montage en circuit ouvert et de mettre en sortie de la membrane un circuit d'évacuation vers un autre récipient, l'écoulement pouvant être contrôlé par une vanne.

La réaction testée est la réaction de polymérisation interfaciale.

La phase organique **B** est composée de 600 ml d'acétone, de 1,2 g de Span 80, de 6 g de laurate d'hexyle, et de 3,3 g de chlorure de sébacoyle, et la phase aqueuse A de 1,2 1 d'eau 2,04 g de Tween 20 et 19,65 g de DETA. Les membranes utilisées sont des membranes Kerasep (Orelis, France) de diamètre de pores 0,1 µm, 150 000 daltons et 1 000 daltons. La surface membranaire utile est de 7,5 10⁻³ m². La préparation est évaluée en terme de diamètre moyen de particules, mesuré sur un Zetasizer (France), et du flux de phase organique.

Les résultats obtenus sont reportés dans le **Tableau 1**. Les flux de phase organique sont élevés (jusqu'à 1,6 m³/h.m²), ce qui confirme les potentialités de ce procédé pour une application industrielle. Le diamètre moyen des particules peut être modifié par le choix de la taille des pores de la membrane (diamètre moyen entre 360 et 260 nm).

**Tableau 1**

| **Essai** | **Membrane** | **Pression (bar)** | **Diamètre des particules (nm)** | **Flux de la phase organique (m³/h.m²)** |
|---|---|---|---|---|
| 1 | 0,1 µm | 3 | 360 | 1,6 |
| 2 | 150 000 daltons | 3 | 337 | 1,1 |
| 3 | 150 000 daltons | 1,2 | 335 | 0,7 |
| 4 | 1000 daltons | 3 | 264 | 0,05 |

### Exemple 2

La réaction testée est la réaction de nanoprécipitation. Le montage expérimental est identique a celui représenté sur la **Figure 2**.

La phase organique (**B**) est composée de 600 ml d'acétone, de 15 g de polycaprolactone, et la phase aqueuse (**A**) de 1,2 1 d'eau et de 2,04 g Tween 20. Les membranes utilisées sont des membranes Kerasep (Orelis, France) de diamètre de pores 0,1 µm, 150 000 daltons et 1 000 daltons. La surface membranaire utile est de 7,5 10⁻³ m².

Les résultats obtenus sont reportés dans le **Tableau 2**. Les flux de phase organique sont de nouveau élevés (jusqu'à 1,6 m³/h.m²), ce qui confirme les potentialités de ce procédé pour une application industrielle. Le diamètre moyen des particules peut être également modifié par le choix de la taille de pores de la membrane (diamètre moyen entre 312 et 264 nm).

**Tableau 2**

| **Essais** | **Membrane** | **Pression (bar)** | **Diamètre des particules (nm)** | **Flux phase organique (m³/h.m²)** |
|---|---|---|---|---|
| 5 | 0,1 µm | 3 | 312 | 1,6 |
| 6 | 150 000 daltons | 3 | 294 | 0,40 |
| 7 | 1 000 daltons | 3 | 264 | 0,03 |

## Revendications

1. Procédé de préparation de particules, et en particulier de nanoparticules, dont au moins la partie périphérique est de nature polymérique, à partir d'une première phase **A** et d'une deuxième phase **B** liquides au moins partiellement miscibles, la deuxième phase **B** contenant un précurseur de la partie polymérique de la particule, ledit précurseur étant soluble dans la phase **B** et au moins partiellement insoluble dans la phase **A**, **caractérisé en ce qu'**il met en oeuvre un réacteur membranaire comportant une membrane poreuse, dans lequel la première phase **A**, circule tangentiellement à la membrane, et la deuxième phase **B** traverse les pores de la membrane avant de venir rencontrer la première phase **A**, pour former les nanoparticules.

2. Procédé de préparation selon la revendication 1 **caractérisé en ce que** le précurseur de la partie polymérique est un polymère **P₁**, qui va précipiter lorsque la phase **B**, sous forme de gouttelettes, pénètre dans la phase **A**, après avoir traversé la membrane.

3. Procédé de préparation selon la revendication 1 **caractérisé en ce que** le précurseur de la partie polymérique est un monomère **M₁**, qui va copolymériser avec un monomère **M₂** contenu dans la phase **A**, lorsque la phase **B**, sous forme de gouttelettes, pénètre dans la phase **A**, après avoir traversé la membrane.

4. Procédé de préparation selon l'une des revendications précédentes **caractérisé en ce que** les nanoparticules formées sont des nanosphères de structure polymérique homogène.

5. Procédé de préparation selon l'une des revendications précédentes **caractérisé en ce que** les nanoparticules formées sont des nanocapsules constituées d'un coeur liquide et d'une enveloppe polymérique.

6. Procédé de préparation selon la revendication précédente **caractérisé en ce que** la phase **B** contient une huile **H** en solution ou en suspension dans le solvant ou mélange de solvants de la phase **B**, qui va former le coeur des nanocapsules obtenues.

7. Procédé de préparation selon l'une des revendications précédentes **caractérisé en ce que** la phase **A** est une phase aqueuse.

8. Procédé de préparation selon l'une des revendications précédentes **caractérisé en ce que** la phase **B** est une phase organique.

9. Procédé de préparation selon l'une des revendications précédentes **caractérisé en ce que** la phase **B** contient une substance **S** en solution ou en suspension dans le solvant ou mélange de solvants de la phase **B**, de préférence choisie parmi un principe actif de médicament, un produit de contraste, un réactif biologique, un pigment, une encre, un lubrifiant, un agent de traitement de surface.

10. Procédé de préparation selon l'une des revendications précédentes **caractérisé en ce que** les particules formées présentent un diamètre inférieur à 600 nm, préférentiellement compris entre 100 et 500 nm, et de préférence compris entre 200 et 350 nm

11. Procédé de préparation selon l'une des revendications précédentes **caractérisé en ce que** la membrane utilisée présente un diamètre de pores compris entre 1 nm et 10 µm, de préférence compris entre 10 nm et 1 µm.

12. Procédé de préparation selon l'une des revendications précédentes **caractérisé en ce qu'**une pression de 0,1 bar à 50 bar, de préférence de 0,3 à 15 bar, est appliquée sur la phase **B**.

13. Procédé de préparation selon l'une des revendications précédentes **caractérisé en ce que** la phase **A** circule le long de la membrane, à une vitesse tangentielle de 0,001 à 20 m.s⁻¹, de préférence de 0,01 à 10 m.s⁻¹.

## Claims

1. Method of preparing particles, and in particular nanoparticles, at least the peripheral part of which is of polymeric nature, starting from a first liquid phase A and a second liquid phase B which are at least partially miscible, the second phase B containing a precursor of the polymeric part of the particle, said precursor being soluble in phase B and at least partially insoluble in phase A, **characterized in that** it employs a membrane reactor having a porous membrane, in which reactor the first phase A flows crosswise with respect to the membrane and the second phase B passes through the pores of the membrane before encountering the first phase A, in order to form the nanoparticles.

2. Method of preparation according to Claim 1, **characterized in that** the precursor of the polymeric part is a polymer P₁, which precipitates when phase B, in the form of droplets, penetrates phase A after having passed through the membrane.

3. Method of preparation according to Claim 1, **characterized in that** the precursor of the polymeric part is a monomer M₁, which copolymerizes with a monomer M₂, contained in phase A, when phase B, in the form of droplets, penetrates phase A after having passed through the membrane.

4. Method of preparation according to one of the preceding claims, **characterized in that** the nanoparticles formed are nanospheres of homogeneous polymeric structure.

5. Method of preparation according to one of the preceding claims, **characterized in that** the nanoparticles formed are nanocapsules consisting of a liquid core and a polymeric shell.

6. Method of preparation according to the preceding claim, **characterized in that** phase B contains an oil H dissolved or suspended in the solvent or solvents mixture for phase B, which oil forms the core of the nanocapsules obtained.

7. Method of preparation according to one of the preceding claims, **characterized in that** phase A is an aqueous phase.

8. Method of preparation according to one of the preceding claims, **characterized in that** phase B is an organic phase.

9. Method of preparation according to one of the preceding claims, **characterized in that** phase B contains a substance S dissolved or suspended in the solvent or solvents mixture for phase B, which substance is preferably chosen from a medicinal active principle, a contrast product, a biological reactant, a pigment, an ink, a lubricant and a surface treatment agent.

10. Method of preparation according to one of the preceding claims, **characterized in that** the particles formed have a diameter of less than 600 nm, preferably between 100 and 500 nm and preferably between 200 and 350 nm.

11. Method of preparation according to one of the preceding claims, **characterized in that** the membrane used has a pore diameter of between 1 nm and 10 µm, preferably between 10 nm and 1 µm.

12. Method of preparation according to one of the preceding claims, **characterized in that** a pressure from 0.1 to 50 bar, preferably from 0.3 to 15 bar, is applied to phase B.

13. Method of preparation according to one of the preceding claims, **characterized in that** phase A flows along the membrane with a tangential velocity from 0.001 to 20 m/s, preferably from 0.01 to 10 m/s.

## Patentansprüche

1. Verfahren zur Herstellung von Partikeln, und insbesondere von Nanopartikeln, von denen wenigstens der Umfangsteil polymerer Art ist, aus einer ersten flüssigen Phase A und einer zweiten flüssigen Phase B, die wenigstens teilweise mischbar sind, wobei die zweite Phase B einen Präkursor des polymeren Teils des Partikels umfaßt, wobei der Präkursor in der Phase B löslich ist und in der Phase A wenigstens teilweise unlöslich ist, **dadurch gekennzeichnet, daß** es einen Membranreaktor mit einer porösen Membran zum Einsatz bringt, in dem die erste Phase A tangential zur Membran strömt und die zweite Phase B die Poren der Membran durchströmt, bevor sie auf die erste Phase A trifft, um die Nanopartikel zu bilden.

2. Herstellungsverfahren nach Anspruch 1, **dadurch gekennzeichnet, daß** der Präkursor des polymeren Teils ein Polymer P₁ ist, das ausgefällt wird, wenn die Phase B, in Form von Tröpfchen, nach Durchströmen der Membran in die Phase A eindringt.

3. Herstellungsverfahren nach Anspruch 1, **dadurch gekennzeichnet, daß** der Präkursor des polymeren Teils ein Monomer M₁ ist, das mit einem Monomer M₂, welches in der Phase A enthalten ist, copolymerisieren wird, wenn die Phase B, in Form von Tröpfchen, nach Durchströmen der Membran in die Phase A eindringt.

4. Herstellungsverfahren nach einem der vorhergehenden Ansprüche, **dadurch gekennzeichnet, daß** die gebildeten Nanopartikel Nanokugeln mit homogener Polymerstruktur sind.

5. Herstellungsverfahren nach einem der vorhergehenden Ansprüche, **dadurch gekennzeichnet, daß** die gebildeten Nanoparükel Nanokapseln sind, die aus einem flüssigen Kern und aus einer Polymerhülle bestehen.

6. Herstellungsverfahren nach dem vorhergehenden Anspruch, **dadurch gekennzeichnet, daß** die Phase B ein in dem Lösungsmittel oder Lösungsmittelgemisch der Phase B gelöstes oder suspendiertes Öl H enthält, das den Kern der erhaltenen Nanokapseln bilden wird.

7. Herstellungsverfahren nach einem der vorhergehenden Ansprüche, **dadurch gekennzeichnet, daß** die Phase A eine wäßrige Phase ist.

8. Herstellungsverfahren nach einem der vorhergehenden Ansprüche, **dadurch gekennzeichnet, daß** die Phase B eine organische Phase ist.

9. Herstellungsverfahren nach einem der vorhergehenden Ansprüche, **dadurch gekennzeichnet, daß** die Phase B eine in dem Lösungsmittel oder Lösungsmittelgemisch der Phase B gelöste oder suspendierte Substanz S enthält, die vorzugsweise aus einem Medikamentenwirkstoff, einem Kontrastmittel, einem biologischen Reagenz, einem Pigment, einem Farbstoff, einem Schmiermittel, einem Oberflächenbehandlungsmittel ausgewählt ist.

10. Herstellungsverfahren nach einem der vorhergehenden Ansprüche, **dadurch gekennzeichnet, daß** die gebildeten Partikel einen Durchmesser von weniger als 600 nm, vorzugsweise im Bereich zwischen 100 und 500 nm und vorzugsweise im Bereich zwischen 200 und 350 nm aufweisen.

11. Herstellungsverfahren nach einem der vorhergehenden Ansprüche, **dadurch gekennzeichnet, daß** die verwendete Membran einen Porendurchmesser zwischen 1 nm und 10 µm, vorzugsweise zwischen 10 nm und 1 µm aufweist.

12. Herstellungsverfahren nach einem der vorhergehenden Ansprüche, **dadurch gekennzeichnet, daß** ein Druck von 0,1 bar bis 50 bar, vorzugsweise von 0,3 bis 15 bar an die Phase B angelegt wird.

13. Herstellungsverfahren nach einem der vorhergehenden Ansprüche, **dadurch gekennzeichnet, daß** die Phase A entlang der Membran mit einer Tangentialgeschwindigkeit zwischen 0,001 und 20 m.s⁻¹, vorzugsweise zwischen 0,01 und 10 m.s⁻¹ strömt.
